# DEMANDE DE BREVET EUROPEEN

(11) **EP 3 438 471 A1**
(43) Date de publication de la demande: **06.02.2019**
(21) Numéro de dépôt: 18185583.4
(22) Date de dépôt: 25.07.2018
(51) Int. Cl.: F16B 5/00, F16B 21/16

(54) **SYSTEME D'ISOLATION THERMIQUE COMPRENANT UNE COUVERTURE ISOLANTE ET UN SYSTEME D'ATTACHE A BILLE**

(30) Priorité: 31.07.2017 FR 1757287
(71) Demandeur: DBM Technologie, 49750 Chemille en Anjou (FR)
(72) Inventeur: BARETTE, Nicolas, 49750 CHEMILLE EN ANJOU (FR)
(74) Mandataire: Cabinet Le Guen Maillet

(57) **Abrégé**

L'invention concerne un système d'isolation thermique (100) comportant une couverture isolante (102) comportant un système d'attache à bille (104) qui comporte un verrou à bille (112) présentant une languette de fixation (122), une cage (120) comportant une base (123) solidaire de la languette de fixation et un dôme (124) solidaire de la base (123), et une bille (114) logée entre la base et le dôme, une languette (110) qui s'étend vers le verrou à bille, où le dôme (124) présente au niveau de la base, une ouverture amont (126) et destinée à recevoir la languette (110) et une ouverture aval (128) orientée à l'opposé, le dôme présentant au niveau de l'ouverture aval, une hauteur supérieure au diamètre de la bille et au niveau de l'ouverture amont, une hauteur inférieure audit diamètre.

## Description

### DOMAINE TECHNIQUE

La présente invention concerne un système d'isolation thermique comprenant une couverture isolante et un système d'attache à bille.

### ETAT DE LA TECHNIQUE ANTERIEURE

Lorsqu'un dispositif est chaud et qu'il faut protéger les éléments qui sont au voisinage de ce dispositif, il est connu de placer une couverture isolante souple ou rigide autour de ce dispositif afin de limiter le transfert de chaleur de ce dispositif vers les autres éléments. La couverture isolante ralentit ainsi la propagation de chaleur.

La mise en place de la couverture consiste à placer la couverture autour du dispositif de manière à ramener deux bords de la couverture l'un contre l'autre. La couverture comporte le long de chacun de ces deux bords plusieurs crochets fixés à la couverture et afin d'assurer la fixation de la couverture autour du dispositif, des éléments élastiques, par exemple des ressorts de traction ou des fils métalliques, sont fixés entre un crochet de l'un des bords et un crochet de l'autre bord.

Même si un tel arrangement donne de bons résultats, il est nécessaire de trouver un mode de fixation alternatif.

### EXPOSE DE L'INVENTION

Un objet de la présente invention est de proposer un système d'isolation thermique qui en particulier est facile à mettre en place.

A cet effet, est proposé un système d'isolation thermique comportant :
- une couverture isolante comportant un premier bord et un deuxième bord destinés à venir l'un contre l'autre ou l'un au-dessus de l'autre, et
- un système d'attache à bille comportant :
   - un verrou à bille présentant une languette de fixation fixée par une de ces extrémités à la couverture isolante en retrait du deuxième bord, une cage comportant une base solidaire de la languette de fixation et un dôme solidaire de la base, et une bille logée entre la base et le dôme,
   - une languette présentant une première extrémité fixée à la couverture isolante en retrait du premier bord et une deuxième extrémité qui s'étend au-delà du premier bord vers le verrou à bille,
où le dôme présente au niveau de la base, une ouverture amont orientée vers le premier bord et destinée à recevoir la deuxième extrémité et une ouverture aval orientée à l'opposé, et où le dôme présente au niveau de l'ouverture aval, une hauteur supérieure au diamètre de la bille et au niveau de l'ouverture amont, une hauteur inférieure au diamètre de la bille.

Avantageusement, la languette et le verrou à bille sont réalisés en métal.

Avantageusement, la languette présente, au niveau de sa deuxième extrémité, un premier perçage, la languette de fixation présente entre son extrémité fixée la couverture isolante et la cage, un deuxième perçage prévu pour venir en face du premier perçage et le système d'isolation thermique comporte un élément de blocage qui est prévu pour être introduit à travers les deux perçages afin de verrouiller la languette avec la languette de fixation.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de face d'un système d'isolation thermique selon l'invention, et
la Fig. 2 est une vue en coupe selon la ligne II-II de la Fig. 1.

### EXPOSE DETAILLE DE MODES DE REALISATION

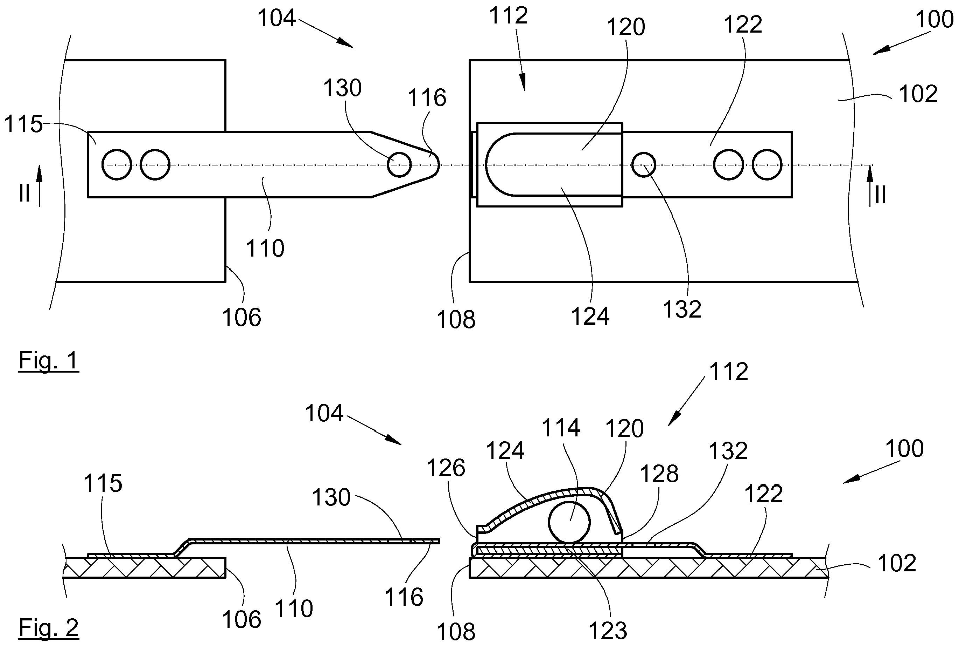

La Fig. 1 et la Fig. 2 montrent un système d'isolation thermique 100 qui comporte une couverture isolante 102 et un système d'attache à bille 104.

La couverture isolante 102 peut être souple ou rigide et est constituée d'un matériau thermiquement isolant réalisé par exemple en fibres de verre ou en silice. La couverture isolante 102 comporte un premier bord 106 et un deuxième bord 108 qui viennent l'un contre l'autre ou l'un au-dessus de l'autre lorsque la couverture isolante 102 est mise en place autour d'un dispositif à isoler.

Le système d'attache à bille 104 comporte une languette 110 fixée à la couverture isolante 102 en retrait du premier bord 106 et un verrou à bille 112 fixé à la couverture isolante 102 en retrait du deuxième bord 108. Comme cela est expliqué ci-après, la languette 110 s'insère dans le verrou à bille 112 au fur et à mesure que les deux bords 106 et 108 se rapprochent et la languette 110 est bloquée par la bille 114 du verrou à bille 112. La languette 110 et le verrou à bille 112 sont fixés sur la même face de la couverture isolante 102.

Pour des soucis de tenue en température, la languette 110 et le verrou à bille 112 sont réalisés en métal, comme par exemple de l'acier inoxydable.

La languette 110 présente une première extrémité 115 qui est fixée à la couverture isolante 102 en retrait du premier bord 106 et une deuxième extrémité 116 qui s'étend au-delà du premier bord 106 vers le verrou à bille 112.

Le verrou à bille 112 présente une cage 120 qui contient la bille 114 et comprend une languette de fixation 122 qui est solidaire de la cage 120 et qui est fixée par une de ses extrémités à la couverture isolante 102 en retrait du deuxième bord 108.

La fixation de la languette 110 et la fixation de la languette de fixation 122 s'effectuent par toute technique appropriée, comme par exemple la soudure, le collage, le sertissage, ...

La cage 120 présente une base 123 et un dôme 124 solidaire de la base 123. La bille 114 est logée entre la base 123 et le dôme 124 et le dôme 124 présente au niveau de la base 123, une ouverture amont 126 orientée vers le premier bord 106 et une ouverture aval 128 orientée à l'opposé. La languette de fixation 122 est ici solidaire de la base 123.

Le dôme 124 présente au niveau de l'ouverture aval 128, une hauteur supérieure au diamètre de la bille 114 et au niveau de l'ouverture amont 126, une hauteur inférieure au diamètre de la bille 114.

Après la mise en place de la couverture isolante 102 et le rapprochement, voir la superposition, des deux bords 106 et 108, sa fixation consiste à introduire la deuxième extrémité 116 dans l'ouverture amont 126 sous la bille 114 jusqu'à la faire ressortir par l'ouverture aval 128. Toute tentative de retrait de la deuxième extrémité 116 va entraîner le déplacement de la bille 114 vers l'ouverture amont 126 où elle va bloquer la deuxième extrémité 116 par serrage du fait du resserrement du dôme 124. La bille 114 agit alors comme un coin de serrage.

La fixation de la couverture isolante 102 par le système d'attache à bille 104 est donc simple à réaliser.

Il est possible de séparer la languette 110 et le verrou à bille 112, en introduisant une autre languette par l'ouverture amont 126 au-dessus de la languette 110 ce qui permet de repousser la bille 114 et évite le coincement lorsque la languette 110 est retirée. Dans ce cas, la hauteur de l'ouverture amont 126 est suffisante pour laisser passer la languette 110 et ladite autre languette.

Dans le mode de réalisation de l'invention présenté sur les Figs., la languette de fixation 122 présente une boucle qui entoure la base 123 et qui y est fixée par tous moyens appropriés.

Selon un mode de réalisation particulier, le système d'attache à bille 104 et la languette 110 sont constitués d'un collier métallique avec système de verrouillage à bille de la société HellermannTyton® comme par exemple le collier référencé MBT8HS. A partir d'un tel collier, la languette 110 est obtenue par découpage d'une partie du collier qui comporte l'extrémité libre du collier, c'est-à-dire celle qui ne porte pas le système de verrouillage à bille, tandis que le système d'attache à bille 104 est constitué du système de verrouillage à bille et de la partie du collier qui y reste attachée.

Dans le mode de réalisation de l'invention présenté sur la Fig. 1, la deuxième extrémité 116 prend la forme d'une pointe en V, mais d'autres formes sont possibles comme par exemple en W.

Pour limiter le risque de retrait accidentel de la languette 110 en cas de vibrations, la languette 110 présente, au niveau de sa deuxième extrémité 116, un premier perçage 130 et la languette de fixation 122 présente entre son extrémité fixée à la couverture isolante 102 et la cage 120, un deuxième perçage 132 qui est prévu pour venir en face du premier perçage 130 après mise en place du système d'isolation thermique 100.

Après cette mise en place, un élément de blocage est alors introduit à travers les deux perçages 130 et 132 pour verrouiller la languette 110 avec la languette de fixation 122 et empêcher ainsi le retrait de la languette 110. Cet élément de blocage est par exemple un fil métallique, par exemple en inox, où après introduction à travers les deux perçages 130 et 132, les deux extrémités dudit fil métallique sont torsadées entre elles afin de former une boucle.

## Revendications

1. Système d'isolation thermique (100) comportant :
- une couverture isolante (102) comportant un premier bord (106) et un deuxième bord (108) destinés à venir l'un contre l'autre ou l'un au-dessus de l'autre, et
- un système d'attache à bille (104) comportant :
- un verrou à bille (112) présentant une languette de fixation (122) fixée par une de ses extrémités à la couverture isolante (102) en retrait du deuxième bord (108), une cage (120) comportant une base (123) solidaire de la languette de fixation (122) et un dôme (124) solidaire de la base (123), et une bille (114) logée entre la base (123) et le dôme (124),
- une languette (110) présentant une première extrémité (115) fixée à la couverture isolante (102) en retrait du premier bord (106) et une deuxième extrémité (116) qui s'étend au-delà du premier bord (106) vers le verrou à bille (112),
où le dôme (124) présente au niveau de la base (123), une ouverture amont (126) orientée vers le premier bord (106) et destinée à recevoir la deuxième extrémité (116) et une ouverture aval (128) orientée à l'opposé, et où le dôme (124) présente au niveau de l'ouverture aval (128), une hauteur supérieure au diamètre de la bille (114) et au niveau de l'ouverture amont (126), une hauteur inférieure au diamètre de la bille (114).

2. Système d'isolation thermique (100) selon la revendication 1, **caractérisé en ce que** la languette (110) et le verrou à bille (112) sont réalisés en métal.

3. Système d'isolation thermique (100) selon l'une des revendications 1 ou 2, **caractérisé en ce que** la languette (110) présente, au niveau de sa deuxième extrémité (116), un premier perçage (130), **en ce que** la languette de fixation (122) présente entre son extrémité fixée à la couverture isolante (102) et la cage (120), un deuxième perçage (132) prévu pour venir en face du premier perçage (130) et **en ce que** le système d'isolation thermique (100) comporte un élément de blocage qui est prévu pour être introduit à travers les deux perçages (130, 132) afin de verrouiller la languette (110) avec la languette de fixation (122).
